# EUROPEAN PATENT APPLICATION

(11) **EP 4 422 129 A1**
(43) Date of publication of application: **28.08.2024**
(21) Application number: 21965283.1
(22) Date of filing: 29.11.2021
(51) Int. Cl.: H04L 12/28, H04L 12/40

(54) **NETWORK COMMUNICATION SYSTEM AND RELATED DEVICE**

(71) Applicant: Huawei Technologies Co., Ltd., Shenzhen, Guangdong 518129 (CN)
(72) Inventor: TONG, Haoran, Shenzhen, Guangdong 518129 (CN); ZHOU, Jun, Shenzhen, Guangdong 518129 (CN); YANG, Bin, Shenzhen, Guangdong 518129 (CN); GUO, Chunlong, Shenzhen, Guangdong 518129 (CN)
(74) Representative: Maiwald GmbH
(86) International application number: PCT/CN2021/133988
(87) International publication number: WO 2023/092552

(57) **Abstract**

Embodiments of this application disclose a network communication system and a related device, to reduce complexity of the network communication system and reduce a failure rate of the network communication system. The network communication system includes a hub and at least one remote unit. The hub is separately connected to the at least one remote unit through a shared bus; the hub is configured to send target information to the at least one remote unit through the shared bus; and the remote unit is configured to receive, through the shared bus, the target information sent by the hub.

## Description

### TECHNICAL FIELD

Embodiments of this application relate to the field of information transmission, and in particular, to a network communication system and a related device.

### BACKGROUND

In a conventional radio base station system, a baseband unit, a hub, and each radio remote module are mainly interconnected through common public radio interfaces (common public radio interfaces, CPRIs). With evolution of a more advanced communication system, a radio communication base station needs more frequency bands, more radio frequency channels, and larger radio frequency bandwidth, to support a higher capacity requirement.

In the current radio base station system, a networking topology structure based on the common public radio interface is expanded based on digital nodes. The digital nodes include uplink ports and downlink ports. For chain networking or tree networking based on the common public radio interface, these digital nodes need to be traversed in topology scanning of an entire network to complete interconnection with subsequent nodes. Correspondingly, these digital nodes also need to have uplink ports and downlink ports, to play a connecting role.

In the existing radio base station system, the digital node needs to have the uplink port and the downlink port, and complexity of the digital node is high. In addition, a subsequent digital node can communicate with an REC only by relying on a previous-level RE, which increases a failure rate of a network communication system.

### SUMMARY

Embodiments of this application provide a network communication system and a related device, to reduce complexity of the network communication system and reduce a failure rate of the network communication system.

A first aspect of embodiments of this application provides a network communication system, to reduce complexity of the network communication system and reduce a failure rate of the network communication system. The network communication system includes a hub and at least one remote unit. The hub is separately connected to the at least one remote unit through a shared bus; the hub is configured to send target information to the at least one remote unit through the shared bus; and the remote unit is configured to receive, through the shared bus, the target information sent by the hub.

In this possible implementation, only one communication link needs to be shared between the hub and each remote unit in the network communication system, so that networking logic is decoupled from a networking physical form. This flattens a networking hierarchy and reduces system complexity and software and hardware costs. In addition, the hub communicates with each remote unit in a point-to-point manner, and the remote units do not need to perform protocol relay or proxy with each other. This weakens a dependency relationship between the remote units and reduces a failure rate of an entire networking system.

In a possible implementation of the first aspect, the hub is further configured to iteratively allocate a corresponding identifier to the at least one remote unit in a flow control response mode through the shared bus.

In this possible implementation, the hub may iteratively allocate corresponding identifiers to the remote units in the flow control response mode, so that the hub can schedule message communication between the remote units, to ensure that scheduling of the shared bus does not conflict.

In a possible implementation of the first aspect, the hub is specifically configured to send the target information to the at least one remote unit through the shared bus based on the identifier corresponding to the at least one remote unit.

In a possible implementation of the first aspect, in a high real-time control scenario, the hub is specifically configured to send the target information to the at least one remote unit in a broadcast manner through the shared bus.

In a possible implementation of the first aspect, the remote unit is further configured to respond in parallel to a target task based on the target information, where the target task is a task that the target information indicates the remote unit to execute.

In a possible implementation of the first aspect, the network communication system includes a star network communication system, a chain network communication system, and a tree network communication system.

A second aspect of embodiments of this application provides a network communication method, to reduce complexity of a network communication system and reduce a failure rate of the network communication system. The method is applied to the network communication system. The network communication system includes a hub and at least one remote unit, and the hub is separately connected to the at least one remote unit through a shared bus. The method includes: The hub sends target information to the at least one remote unit through the shared bus; and the remote unit receives, through the shared bus, the target information sent by the hub.

In this possible implementation, only one communication link needs to be shared between the hub and each remote unit in the network communication system, so that networking logic is decoupled from a networking physical form. This flattens a networking hierarchy and reduces system complexity and software and hardware costs. In addition, the hub communicates with each remote unit in a point-to-point manner, and the remote units do not need to perform protocol relay or proxy with each other. This weakens a dependency relationship between the remote units and reduces a failure rate of an entire networking system.

In a possible implementation of the second aspect, before that the hub sends the target information to the at least one remote unit through the shared bus, the method further includes: The hub iteratively allocates a corresponding identifier to the at least one remote unit in a flow control response mode through the shared bus.

In this possible implementation, the hub may iteratively allocate corresponding identifiers to the remote units in the flow control response mode, so that the hub can schedule message communication between the remote units, to ensure that scheduling of the shared bus does not conflict.

In a possible implementation of the second aspect, that the hub sends the target information to the at least one remote unit through the shared bus includes: The hub sends the target information to the at least one remote unit through the shared bus based on the identifier corresponding to the at least one remote unit.

In a possible implementation of the second aspect, in a high real-time control scenario, that the hub sends the target information to the at least one remote unit through the shared bus includes: The hub sends the target information to the at least one remote unit in a broadcast manner through the shared bus.

In a possible implementation of the second aspect, the method further includes: The remote unit responds in parallel to a target task based on the target information, where the target task is a task that the target information indicates the remote unit to execute.

In a possible implementation of the second aspect, the network communication system includes a star network communication system, a chain network communication system, and a tree network communication system.

A third aspect of embodiments of this application provides a hub, to reduce complexity of a network communication system and reduce a failure rate of the network communication system. The hub is separately connected to at least one remote unit through a shared bus. The hub is configured to: send target information to the at least one remote unit through the shared bus; and receive, through the shared bus, at least one piece of response information that is sent by the at least one remote unit and that corresponds to the target information.

In this possible implementation, only one communication link needs to be shared between the hub and each remote unit in the network communication system, so that networking logic is decoupled from a networking physical form. This flattens a networking hierarchy and reduces system complexity and software and hardware costs. In addition, the hub communicates with each remote unit in a point-to-point manner, and the remote units do not need to perform protocol relay or proxy with each other. This weakens a dependency relationship between the remote units and reduces a failure rate of an entire networking system.

In a possible implementation of the third aspect, the hub is further configured to iteratively allocate a corresponding identifier to the at least one remote unit in a flow control response mode through the shared bus.

In this possible implementation, the hub may iteratively allocate corresponding identifiers to the remote units in the flow control response mode, so that the hub can schedule message communication between the remote units, to ensure that scheduling of the shared bus does not conflict.

In a possible implementation of the third aspect, the hub is specifically configured to send the target information to the at least one remote unit through the shared bus based on the identifier corresponding to the at least one remote unit.

In a possible implementation of the third aspect, in a high real-time control scenario, the hub is specifically configured to send the target information to the at least one remote unit in a broadcast manner through the shared bus.

A fourth aspect of embodiments of this application provides a remote unit, to reduce complexity of a network communication system and reduce a failure rate of the network communication system. The remote unit is connected to a hub through a shared bus. The remote unit is configured to: receive, through the shared bus, target information sent by the hub; and send response information to the hub through the shared bus, where the response information corresponds to the target information.

In this possible implementation, only one communication link needs to be shared between the hub and each remote unit in the network communication system, so that networking logic is decoupled from a networking physical form. This flattens a networking hierarchy and reduces system complexity and software and hardware costs. In addition, the hub communicates with each remote unit in a point-to-point manner, and the remote units do not need to perform protocol relay or proxy with each other. This weakens a dependency relationship between the remote units and reduces a failure rate of an entire networking system.

In a possible implementation of the fourth aspect, the remote unit is further configured to respond in parallel to a target task based on the target information, where the target task is a task that the target information indicates the remote unit to execute.

According to the foregoing technical solutions, it can be learned that an embodiment of this application has the following advantages.

In embodiments of this application, only one communication link needs to be shared between the hub and each remote unit in the network communication system, so that networking logic is decoupled from a networking physical form. This flattens a networking hierarchy and reduces system complexity and software and hardware costs. In addition, the hub communicates with each remote unit in a point-to-point manner, and the remote units do not need to perform protocol relay or proxy with each other. This weakens a dependency relationship between the remote units and reduces a failure rate of an entire networking system.

### BRIEF DESCRIPTION OF DRAWINGS

FIG. 1a is a diagram of a network architecture of a radio base station system;
FIG. 1b is a diagram of a network architecture of a radio base station system;
FIG. 2 is a diagram of a network architecture of a network communication system according to an embodiment of this application;
FIG. 3 is a schematic flowchart of a network communication method according to an embodiment of this application;
FIG. 4 is a diagram of a scenario of a network communication method according to an embodiment of this application;
FIG. 5 is a signaling flowchart of a network communication method according to an embodiment of this application;
FIG. 6 is a diagram of a structure of a hub according to an embodiment of this application; and
FIG. 7 is a diagram of a structure of a remote unit according to an embodiment of this application.

### DESCRIPTION OF EMBODIMENTS

Embodiments of this application provide a network communication system and a related device, to reduce complexity of the network communication system and reduce a failure rate of the network communication system.

The following describes embodiments of this application with reference to the accompanying drawings. It is clear that the described embodiments are merely some rather than all of embodiments of this application. A person of ordinary skill in the art may learn that, with development of technologies and emergence of a new scenario, technical solutions provided in embodiments of this application are also applicable to a similar technical problem.

In the specification, claims, and accompanying drawings of this application, the terms "first", "second", and so on are intended to distinguish between similar objects but do not necessarily indicate a specific order or sequence. It should be understood that the data used in such a way may be interchangeable in an appropriate situation, so that embodiments described herein can be implemented in a sequence other than that illustrated or described herein. In addition, the terms "include" and "have", and any variations thereof are intended to cover non-exclusive inclusions. For example, a process, a method, a system, a product, or a device that includes a series of steps or units is not necessarily limited to those steps or units that are clearly listed, but may include other steps or units that are not clearly listed or are inherent to the process, method, product, or device.

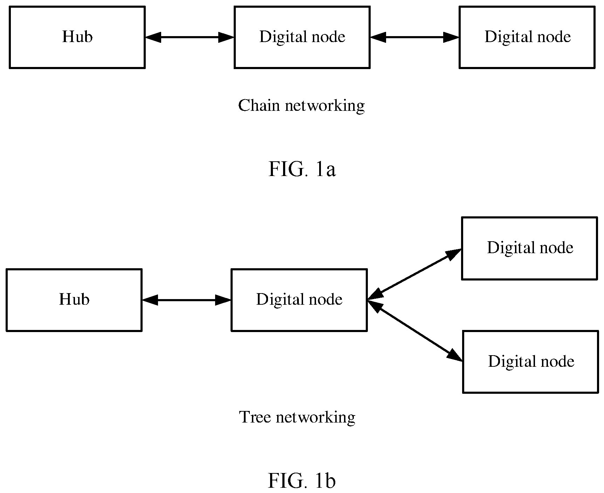

As shown in FIG. 1a and FIG. 1b, in a conventional radio base station system, a hub and each digital node, namely, each radio remote module, are mainly interconnected through common public radio interfaces (common public radio interfaces, CPRIs). With evolution of a more advanced communication system, a radio communication base station needs more frequency bands, more radio frequency channels, and larger radio frequency bandwidth, to support a higher capacity requirement. In the current radio base station system, a networking topology structure based on the common public radio interface is expanded based on digital nodes, where the digital nodes include uplink ports and downlink ports. For chain networking or tree networking based on the common public radio interface, these digital nodes need to be traversed in topology scanning of an entire network to complete interconnection with subsequent nodes. Correspondingly, these digital nodes also need to have uplink ports and downlink ports, to play a connecting role.

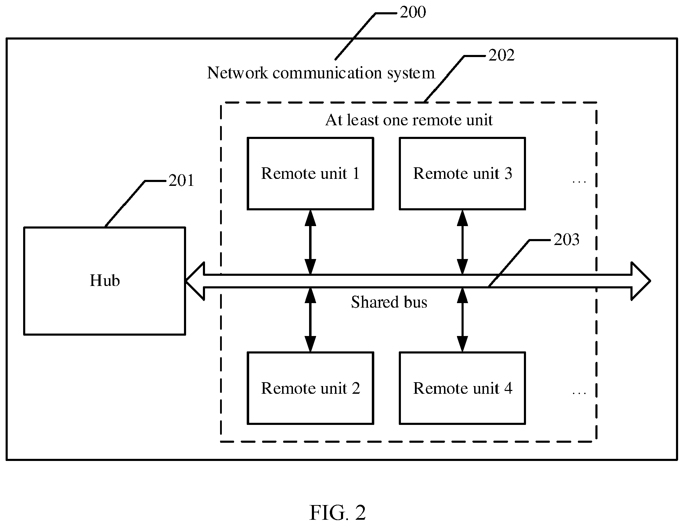

As shown in FIG. 2, an embodiment of this application provides a network communication system 200, to reduce complexity of the network communication system 200 and reduce a failure rate of the network communication system 200. The network communication system 200 includes a hub 201 and at least one remote unit 202. The hub 201 is separately connected to the at least one remote unit 202 through a shared bus 203.

The hub 201 is configured to: send target information to the at least one remote unit 202 through the shared bus 203; and receive response information sent by the at least one remote unit 202, where the response information corresponds to the target information.

The hub 201 is specifically configured to send the target information to the at least one remote unit 202 through the shared bus 203 based on an identifier corresponding to the at least one remote unit 202. In a high real-time control scenario, the hub 201 is specifically configured to send the target information to the at least one remote unit 202 in a broadcast manner through the shared bus 203.

In a possible implementation, the target information may be initiated by another remote unit 202. For example, a first remote unit 202 sends obtaining information to the hub 201 through the shared bus 203, where the obtaining information indicates that the first remote unit 202 needs to obtain status information of a second remote unit 202. After receiving the obtaining information, the hub 201 sends the target information to the second remote unit 202, where the target information indicates that the first remote unit 202 needs to obtain the status information of the second remote unit 202. Then, the second remote unit 202 sends the status information, namely, the response information, to the hub 201, and the hub 201 sends the response information to the first remote unit 202.

In embodiments of this application, the hub 201 may perform information forwarding processing. The hub 201 communicates with each remote unit 202 in a point-to-point manner, and the remote units 202 do not need to perform protocol relay or proxy with each other. This weakens a dependency relationship between the remote units 202, and reduces a failure rate of an entire networking system.

In a possible implementation, the hub 201 is further configured to iteratively allocate the corresponding identifier to the at least one remote unit 202 in a flow control response mode through the shared bus 203.

In embodiments of this application, the hub 201 may iteratively allocate corresponding identifiers to the remote units 202 in the flow control response mode, so that the hub 201 can schedule message communication between the remote units 202, to ensure that scheduling of the shared bus 203 does not conflict.

The plurality of remote units 202 are configured to: receive, through the shared bus 203, the target information sent by the hub 201, and send the response information to the hub 201 through the shared bus 203, where the response information is a response corresponding to the target information. In other words, after executing a target task indicated by the target information, the remote unit 202 generates the corresponding response information and sends the response information to the hub 201 through the shared bus 203.

In a possible implementation, the remote unit 202 is further configured to respond in parallel to the target task based on the target information, where the target task is a task that the target information indicates the remote unit 202 to execute.

In embodiments of this application, the network communication system includes a star network communication system, a chain network communication system, a tree network communication system, and the like.

In embodiments of this application, the network communication system includes a radio base station system, or may alternatively be other evolvable and multi-topology structure networking.

In embodiments of this application, only one communication link needs to be shared between the hub 201 and each remote unit 202 in the network communication system, so that networking logic is decoupled from a networking physical form. This flattens a networking hierarchy and reduces system complexity and software and hardware costs. In addition, the hub 201 communicates with each remote unit 202 in the point-to-point manner, and the remote units 202 do not need to perform protocol relay or proxy with each other. This weakens the dependency relationship between the remote units 202 and reduces the failure rate of the entire networking system.

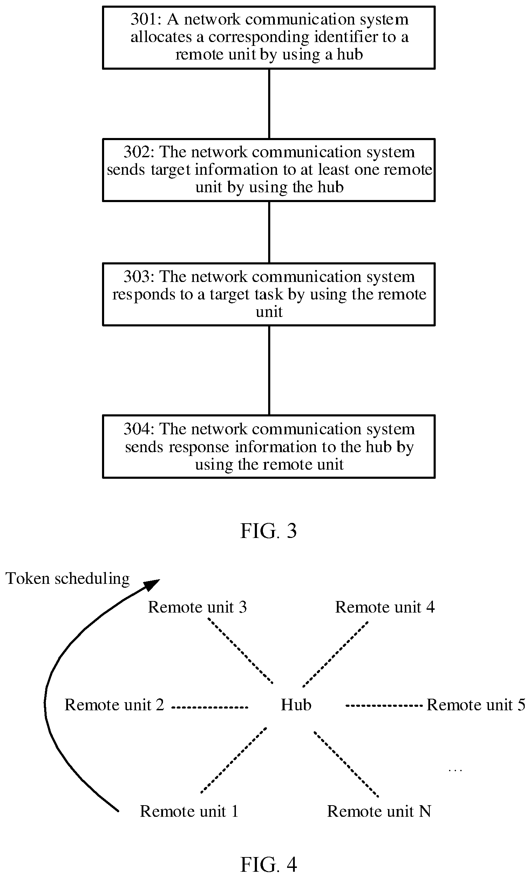

As shown in FIG. 3, an embodiment of this application provides a network communication method, to reduce complexity of a network communication system and reduce a failure rate of the network communication system. The method is applied to the network communication system. The network communication system includes a hub and at least one remote unit. The hub is separately connected to the at least one remote unit through a shared bus. The method includes the following steps.

301: The network communication system allocates a corresponding identifier to the remote unit by using the hub.

As shown in FIG. 4, the network communication system iteratively allocates the corresponding identifier to the at least one remote unit in a flow control response mode, namely, a token scheduling manner, through the shared bus by using the hub.

In this possible implementation, the hub may iteratively allocate corresponding identifiers to remote units in the flow control response mode, so that the hub can schedule message communication between the remote units, to ensure that scheduling of the shared bus does not conflict.

302: The network communication system sends target information to the at least one remote unit by using the hub.

The network communication system sends the target information to the at least one remote unit through the shared bus by using the hub. Correspondingly, the network communication system receives, by using the remote unit, the target information sent by the hub through the shared bus. Specifically, the network communication system sends, through the shared bus by using the hub, the target information to the at least one remote unit based on the identifier corresponding to the at least one remote unit.

In a possible implementation, in a high real-time control scenario, the network communication system may send the target information to the at least one remote unit in a broadcast manner through the shared bus by using the hub.

303: The network communication system responds to a target task by using the remote unit.

The network communication system responds in parallel to the target task based on the target information by using the remote unit, where the target task is a task that the target information indicates the remote unit to execute.

304: The network communication system sends response information to the hub by using the remote unit.

After receiving the target information and executing the target task, the remote unit sends the response information to the hub, where the response information is corresponding information generated after the target task is executed.

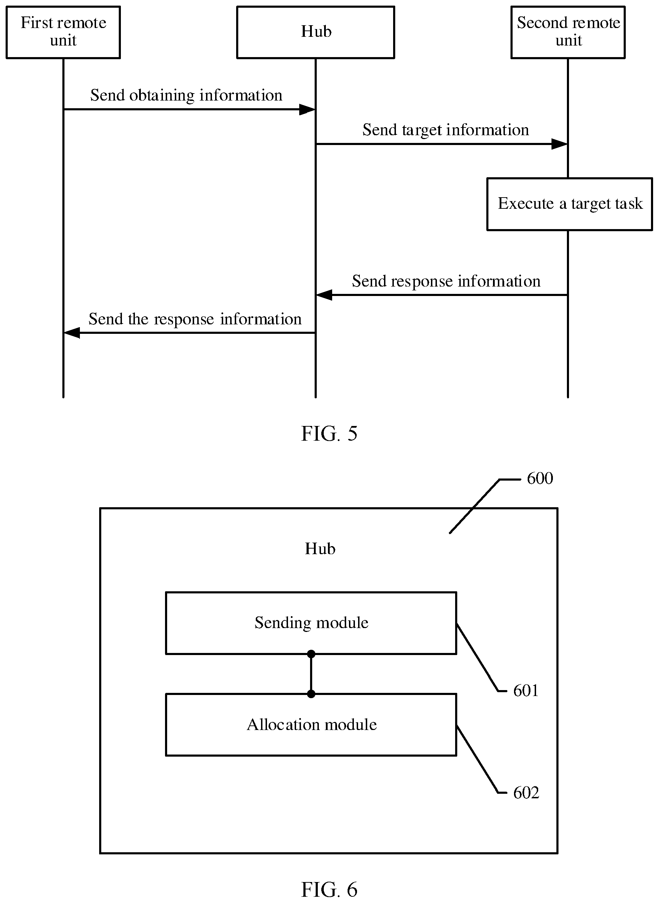

As shown in FIG. 5, in a possible implementation of embodiments of this application, the target information may be initiated by another remote unit. For example, a first remote unit sends obtaining information to the hub through the shared bus, where the obtaining information indicates that the first remote unit needs to obtain status information of a second remote unit. After receiving the obtaining information, the hub sends the target information to the second remote unit, where the target information indicates that the first remote unit needs to obtain the status information of the second remote unit. Then, the second remote unit sends the status information, namely, the response information, to the hub, and the hub sends the response information to the first remote unit.

In embodiments of this application, only one communication link needs to be shared between the hub and each remote unit in the network communication system, so that networking logic is decoupled from a networking physical form. This flattens a networking hierarchy and reduces system complexity and software and hardware costs. In addition, the hub communicates with each remote unit in a point-to-point manner, and the remote units do not need to perform protocol relay or proxy with each other. This weakens a dependency relationship between the remote units and reduces a failure rate of an entire networking system.

As shown in FIG. 6, an embodiment of this application provides a hub 600, to reduce complexity of a network communication system and reduce a failure rate of the network communication system. The hub 600 is separately connected to at least one remote unit through a shared bus. The hub 600 includes: a sending module 601 and an allocation module 602.

The sending module 601 is configured to: send target information to the at least one remote unit through the shared bus; and receive, through the shared bus, at least one piece of response information that is sent by the at least one remote unit and that corresponds to the target information.

The sending module 601 is specifically configured to send the target information to the at least one remote unit through the shared bus based on an identifier corresponding to the at least one remote unit.

In a high real-time control scenario, the sending module 601 is specifically configured to send the target information to the at least one remote unit in a broadcast manner through the shared bus.

The allocation module 602 is configured to iteratively allocate the corresponding identifier to the at least one remote unit in a flow control response mode through the shared bus.

In embodiments of this application, the hub may iteratively allocate corresponding identifiers to remote units in the flow control response mode, so that the hub can schedule message communication between the remote units, to ensure that scheduling of the shared bus does not conflict.

In embodiments of this application, only one communication link needs to be shared between the hub and each remote unit in the network communication system, so that networking logic is decoupled from a networking physical form. This flattens a networking hierarchy and reduces system complexity and software and hardware costs. In addition, the hub communicates with each remote unit in a point-to-point manner, and the remote units do not need to perform protocol relay or proxy with each other. This weakens a dependency relationship between the remote units and reduces a failure rate of an entire networking system.

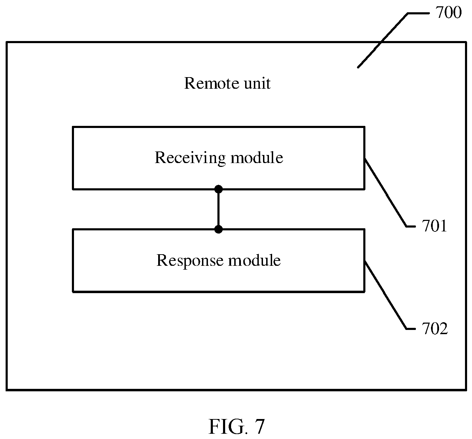

As shown in FIG. 7, an embodiment of this application provides a remote unit 700, to reduce complexity of a network communication system and reduce a failure rate of the network communication system. The remote unit 700 is connected to a hub through a shared bus. The remote unit 700 includes: a receiving module 701 and a response module 702.

The receiving module 701 is configured to: receive, through the shared bus, target information sent by the hub; and send response information to the hub through the shared bus, where the response information corresponds to the target information.

The response module 702 is configured to respond in parallel to a target task based on the target information, where the target task is a task that the target information indicates the remote unit to execute.

In embodiments of this application, only one communication link needs to be shared between the hub and each remote unit in the network communication system, so that networking logic is decoupled from a networking physical form. This flattens a networking hierarchy and reduces system complexity and software and hardware costs. In addition, the hub communicates with each remote unit in a point-to-point manner, and the remote units do not need to perform protocol relay or proxy with each other. This weakens a dependency relationship between the remote units and reduces a failure rate of an entire networking system.

It may be clearly understood by a person skilled in the art that, for convenience and brevity of description, for specific working processes of the foregoing described system, apparatus, and unit, refer to corresponding processes in the foregoing method embodiments, and details are not described herein again.

In several embodiments provided in this application, it should be understood that the disclosed system, apparatus, and method may be implemented in other manners. For example, the foregoing apparatus embodiments are only examples. For example, the foregoing unit division is merely logical function division, and there may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk drive, a read-only memory (ROM, read-only memory), a random access memory (RAM, random access memory), a magnetic disk, or an optical disc.

## Claims

1. A network communication system, wherein the network communication system comprises a hub and at least one remote unit, and the hub is separately connected to the at least one remote unit through a shared bus;
the hub is configured to send target information to the at least one remote unit through the shared bus; and
the remote unit is configured to receive, through the shared bus, the target information sent by the hub.

2. The network communication system according to claim 1, wherein the hub is further configured to:
iteratively allocate a corresponding identifier to the at least one remote unit in a flow control response mode through the shared bus.

3. The network communication system according to claim 2, wherein the hub is specifically configured to:
send the target information to the at least one remote unit through the shared bus based on the identifier corresponding to the at least one remote unit.

4. The network communication system according to any one of claims 1 to 3, wherein in a high real-time control scenario, the hub is specifically configured to:
send the target information to the at least one remote unit in a broadcast manner through the shared bus.

5. The network communication system according to claim 4, wherein the remote unit is further configured to:
respond in parallel to a target task based on the target information, wherein the target task is a task that the target information indicates the remote unit to execute.

6. The network communication system according to any one of claims 1 to 5, wherein the network communication system comprises a star network communication system, a chain network communication system, and a tree network communication system.

7. A network communication method, wherein the method is applied to a network communication system, the network communication system comprises a hub and at least one remote unit, and the hub is separately connected to the at least one remote unit through a shared bus; and the method comprises:
sending, by the hub, target information to the at least one remote unit through the shared bus; and
receiving, by the remote unit through the shared bus, the target information sent by the hub.

8. The network communication method according to claim 7, wherein before the sending, by the hub, target information to the at least one remote unit through the shared bus, the method further comprises:
iteratively allocating, by the hub, a corresponding identifier to the at least one remote unit in a flow control response mode through the shared bus.

9. The network communication method according to claim 8, wherein the sending, by the hub, target information to the at least one remote unit through the shared bus comprises:
sending, by the hub, the target information to the at least one remote unit through the shared bus based on the identifier corresponding to the at least one remote unit.

10. The network communication method according to any one of claims 7 to 9, wherein in a high real-time control scenario, the sending, by the hub, target information to the at least one remote unit through the shared bus comprises:
sending, by the hub, the target information to the at least one remote unit in a broadcast manner through the shared bus.

11. The network communication method according to claim 10, wherein the method further comprises:
responding, by the remote unit in parallel, to a target task based on the target information, wherein the target task is a task that the target information indicates the remote unit to execute.

12. The network communication method according to any one of claims 7 to 11, wherein the network communication system comprises a star network communication system, a chain network communication system, and a tree network communication system.

13. A hub, wherein the hub is separately connected to at least one remote unit through a shared bus; and
the hub is configured to: send target information to the at least one remote unit through the shared bus; and receive, through the shared bus, at least one piece of response information that is sent by the at least one remote unit and that corresponds to the target information.

14. The hub according to claim 13, wherein the hub is further configured to:
iteratively allocate a corresponding identifier to the at least one remote unit in a flow control response mode through the shared bus.

15. The hub according to claim 14, wherein the hub is specifically configured to:
send the target information to the at least one remote unit through the shared bus based on the identifier corresponding to the at least one remote unit.

16. The hub according to any one of claims 13 to 15, wherein in a high real-time control scenario, the hub is specifically configured to:
send the target information to the at least one remote unit in a broadcast manner through the shared bus.

17. A remote unit, wherein the remote unit is connected to a hub through a shared bus; and
the remote unit is configured to: receive, through the shared bus, target information sent by the hub; and send response information to the hub through the shared bus, wherein the response information corresponds to the target information.

18. The remote unit according to claim 17, wherein the remote unit is further configured to:
respond in parallel to a target task based on the target information, wherein the target task is a task that the target information indicates the remote unit to execute.
